# EUROPEAN PATENT SPECIFICATION

(11) **EP 3 534 620 B1**
(45) Date of publication and mention of the grant of the patent: **15.06.2022**
(21) Application number: 17864141.1
(22) Date of filing: 11.10.2017
(51) Int. Cl.: H04N 21/4402, H04N 5/66, H04N 5/765, H04N 21/4363, H04N 5/77

(54) **SIGNAL PROCESSING DEVICE AND METHOD, AND PROGRAM**
SIGNALVERARBEITUNGSVORRICHTUNG UND -VERFAHREN UND PROGRAMM
DISPOSITIF ET PROCÉDÉ DE TRAITEMENT DE SIGNAL, ET PROGRAMME

(30) Priority: 25.10.2016 JP 2016208272
(43) Date of publication of application: 04.09.2019
(73) Proprietor: Sony Group Corporation, Tokyo 108-0075 (JP)
(72) Inventor: WAKAZONO, Masafumi, Tokyo 108-0075 (JP)
(74) Representative: D Young & Co LLP
(86) International application number: PCT/JP2017/036768
(87) International publication number: WO 2018/079259

(56) References cited:
- WO-A1-01/54402
- WO-A1-2016/063474
- WO-A1-2016/157839
- US-A1- 2010 123 794
- US-A1- 2011 242 370
- US-A1- 2013 308 015
- US-A1- 2014 308 017
- "Study Group Report High-Dynamic-Range (HDR) Imaging Ecosystem", , 19 September 2015 (2015-09-19), XP055250336, Retrieved from the Internet: URL:https://www.smpte.org/sites/default/fi les/Study Group On High-Dynamic-Range-HDR-Ecosystem.pdf [retrieved on 2016-02-16]

## Description

### TECHNICAL FIELD

The present disclosure relates to a signal processing device and method, and a program, and more particularly, to a signal processing device and method, and a program that are capable of appropriately converting the dynamic range of an output image signal.

### BACKGROUND ART

The display capabilities of display devices have improved, and those display devices are becoming capable of displaying brighter colors and darker colors than the colors that conventional devices are capable of displaying. A plurality of standards for high dynamic range signals (HDR signals) have been developed, to define image signals for taking advantage of this evolution of displays. As these new standards have been developed, signals based on the assumption of various dynamic ranges are now being used.

Meanwhile, if an HDR signal is input to a display device (an SDR device) that is not compatible with HDR signals, the display becomes dark, which is not preferable. In view of this, to achieve compatibility with the past display devices, a video output device normally checks the performance of each output destination device, and outputs an image signal after converting the dynamic range of the image signal in accordance with the display performance (see Patent Document 1).

### CITATION LIST

### PATENT DOCUMENT

Patent Document 1: Japanese Patent Application Laid-Open No. 2015-8361
Patent Document 2: US 2013/308015 A1
Patent Document 3: US 2011/242370 A1
Patent Document 4: US 2014/308017 A1

### SUMMARY OF THE INVENTION

### PROBLEMS TO BE SOLVED BY THE INVENTION

However, there are cases where a device other than a display device (such a device will be hereinafter referred to as a non-display device) is connected as an output destination of a video output device. If a dynamic range conversion process is performed in a case where the output is directed to a non-display device, the dynamic range that the video output device originally has cannot be fully taken advantage of.

The present disclosure is made in view of those circumstances, and is to enable appropriate conversion of the dynamic range of an output image signal.

### SOLUTIONS TO PROBLEMS

A signal processing device according to claim 1.

A signal processing method according to claim 8.

A computer program according to claim 9.

In one aspect of the present technology, conversion of an image signal to be output to the output device is prohibited in a case where the intended use of an output to a connected output device is other than display, and a signal is transmitted to the output device.

### EFFECTS OF THE INVENTION

According to the present technology, it is possible to convert the dynamic range of an output image signal. Particularly, according to the present technology, it is possible to appropriately convert the dynamic range of an output image signal.

Note that the advantageous effects described in this specification are merely examples, and the advantageous effects of the present technology are not limited to them and may include some additional effects.

### BRIEF DESCRIPTION OF DRAWINGS

Fig. 1 is a block diagram showing an example configuration of a signal output system to which the present technology is applied.
Fig. 2 is a block diagram showing an example configuration of an imaging device.
Fig. 3 is a diagram for explaining the outline of the present technology.
Fig. 4 is a block diagram showing an example configuration of an output device that is a display device.
Fig. 5 is a block diagram showing an example configuration of a dynamic range conversion unit.
Fig. 6 is a flowchart for explaining a signal output process to be performed by the imaging device.
Fig. 7 is a table for explaining other examples of image signal conversion.
Fig. 8 is a table for explaining other examples of image signal conversion.
Fig. 9 is a block diagram showing an example configuration of a computer to which the present technology is applied.
Fig. 10 is a diagram schematically showing the overall configuration of an operating room system.
Fig. 11 is a view of an example of display on an operation screen of a centralized operation panel.
Fig. 12 is a diagram showing an example situation of surgery in which the operating room system is used.
Fig. 13 is a block diagram showing an example of the functional configurations of a camera head and a CCU shown in Fig. 12.

### MODES FOR CARRYING OUT THE INVENTION

The following is a description of modes for carrying out the present disclosure (the modes will be hereinafter referred to as embodiments).

### <Example Configuration of a System>

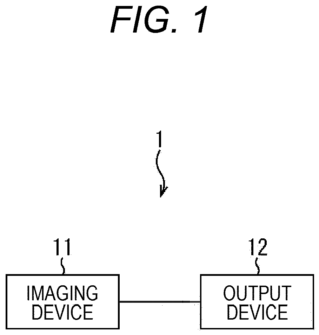

Fig. 1 is a diagram showing an example configuration of a signal output system to which the present technology is applied.

In the example shown in Fig. 1, a signal output system 1 includes an imaging device 11 as a signal processing device and an output device 12. In the signal output system 1, the imaging device 11 captures an image of the object, and performs control to subject the captured image signal to a dynamic range conversion process, in accordance with the capability and the type (the intended use of an output) of the output device 12.

In the imaging device 11, HDMI (registered trademark) is used for connection with the output device 12, for example, and EDID or DEA/EIA-861 information is used as output device information in determining the intended use of an output of the output device 12. For example, of the output device information obtained from EDID, the manufacturer (name or number) of the output device 12, the model name, and/or the serial number is used.

The output device 12 is formed with a display device (an HDR signal-compatible display or an HDR signal-incompatible display), a recording device (a recorder), a portable recording device, a measuring device, or the like.

### <Example Configuration of the Imaging Device>

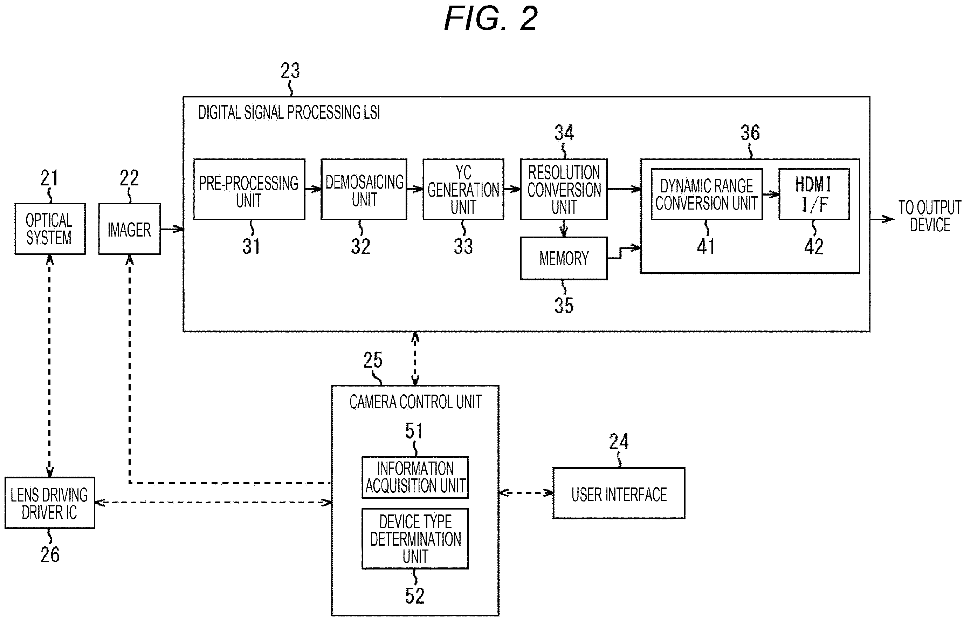

Fig. 2 is a block diagram showing an example configuration of the imaging device.

In the example shown in Fig. 2, the imaging device 11 includes an optical system 21, an imager 22, a digital signal processing LSI 23, a user interface 24, a camera control unit 25, and a lens driving driver IC 26.

The optical system 21 is formed with a lens or the like. The imager 22 is formed with a CMOS solid-state imaging element or the like. Under the control of the camera control unit 25, the imager 22 forms an image of the object input via the optical system 21. By doing so, the imager 22 acquires an image signal, and outputs the acquired image signal to the digital signal processing LSI 23.

Under the control of the camera control unit 25, the digital signal processing LSI 23 subjects the image signal from the imager 22 to predetermined digital signal processing, and a dynamic range conversion process depending on the output device 12 attached to the imaging device 11. The digital signal processing LSI 23 transmits the processed video signal to the output device 12.

The digital signal processing LSI 23 includes a pre-processing unit 31, a demosaicing unit 32, a YC generation unit 33, a resolution conversion unit 34, a memory 35, and a signal processing unit 36.

The pre-processing unit 31 performs processing such as white balance adjustment and gamma correction on the image signal from the imager 22, and outputs the processed image signal to the demosaicing unit 32. By calculating the color distribution shape statistically, the demosaicing unit 32 performs a demosaicing process to uniformize all the intensities (intensity information) of R, G, and B at the respective pixel positions in the gamma-corrected mosaic image. As a result, the output signals from the demosaicing unit 32 are three image signals corresponding to the three colors R, G, and B. Further, in the gamma correction process herein, correction is performed depending on different photoelectric conversion characteristics between a case where SDR signals are to be generated and a case where HDR signals are to be generated (the characteristics of SDR signals and the characteristics of HDR signals are specified in the standard).

The YC generation unit 33 generates a luminance signal and a color difference signal from the R, G, and B image signals from the demosaicing unit 32, and outputs the generated luminance signal and color difference signal (hereinafter collectively referred to as the video signal) to the resolution conversion unit 34. The resolution conversion unit 34 converts the resolution to an appropriate resolution, and outputs the converted video signal to the memory 35 or the signal processing unit 36.

The memory 35 temporarily stores the video signal.

The signal processing unit 36 includes a dynamic range conversion unit 41 and an HDMI interface 42. Under the control of the camera control unit 25, the dynamic range conversion unit 41 performs a dynamic range conversion process on the video signal from the resolution conversion unit 34 or the memory 35, depending on the output device 12, and outputs the video signal to the HDMI interface 42. The HDMI interface 42 outputs the video signal from the dynamic range conversion unit 41 to the output device 12. When the output device 12 is connected thereto, the HDMI interface 42 detects the connection, and notifies the camera control unit 25 of the detection. Under the control of the camera control unit 25, the HDMI interface 42 acquires output device information from the output device 12, and supplies the acquired output device information to the camera control unit 25.

The user interface 24 receives an operation signal based on a user operation such as mode setting, and outputs the operation signal to the camera control unit 25. The camera control unit 25 controls the respective components (the imager 22, the digital signal processing LSI 23, the user interface 24, and the lens driving driver IC 26) of the imaging device 11. Further, the camera control unit 25 includes an information acquisition unit 51 and a device type determination unit 52 particularly as functional blocks.

Upon receipt of the notification of detection of the output device 12 from the HDMI interface 42, the information acquisition unit 51 controls the HDMI interface 42 to acquire the output device information (EDID or DEA/EIA-861 information, for example) from the output device 12. On the basis of the output device information from the HDMI interface 42, the device type determination unit 52 determines the type (the intended use of an output), the capability (information indicating compatibility with HDR signals), and the like of the connected output device 12, and controls the dynamic range conversion unit 41 in accordance with a result of the determination.

The lens driving driver IC 26 drives the optical system 21, under the control of the camera control unit 25.

Here, a device that is not a display may be connected as the output device 12 that is the output destination of signals from the imaging device 11. However, if a dynamic range conversion process is performed in a case where signals are output to a device that is not a display, it would become impossible to make full use of the dynamic range of the output device.

Note that it is likely to occur in a case where signals are output to a portable recorder or the like, and in a case where signals are output to a measuring instrument for analyzing signals, for example. In a case where signals are output to any of those devices, it is desirable not to perform any dynamic range conversion process, regardless of the display capability of the device.

### <Description of the Outline>

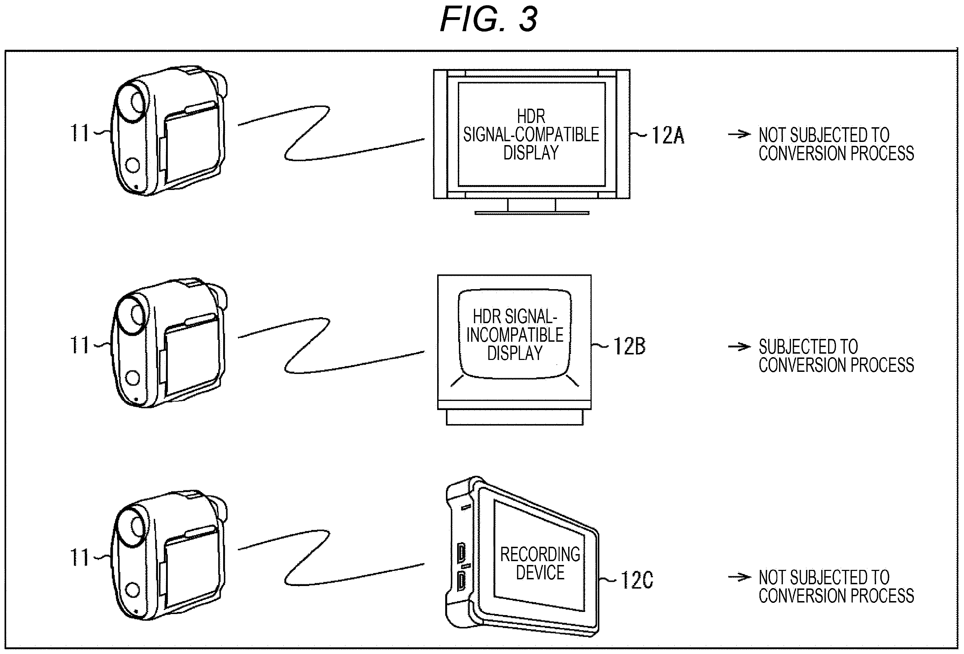

In view of the above, a signal conversion process (a conversion process related to the dynamic range, for example) is performed depending on the output device 12 in the signal output system 1 shown Fig. 1. Referring now to Fig. 3, the outline of this technology is described.

In the examples shown in Fig. 3, the output devices 12 connected to the imaging device 11 are an HDR signal-compatible display 12A, an HDR signal-incompatible display 12B, and a recording device 12C.

In a case where the HDR signal-compatible display 12A is connected to the imaging device 11, or where the output device 12 is compatible with HDR signals and the signal to be output is an HDR signal, the HDR signal is output through procedures compliant with a standard. For example, in a case where the output device 12 is compliant with the HDMI 2.0a standard, an HDR InfoFrame, which is a control signal (control frame) specified by the standard, is sent prior to transmission of a frame image signal. Note that the same applies in a case where the recording device 12C is compliant with HDR signals.

In a case where an output device 12 that is not compatible with HDR signals is connected to the imaging device 11, or where the output device 12 is not compatible with HDR signals (but is compatible with SDR signals), an appropriate video signal is transmitted depending on the purpose of the output (or the intended use of the output).

For example, in a case where the intended use of the output is display, or where the HDR signal-incompatible display 12B is connected, if an HDR signal is output directly to the HDR signal-incompatible display 12B, a dark image would be normally displayed.

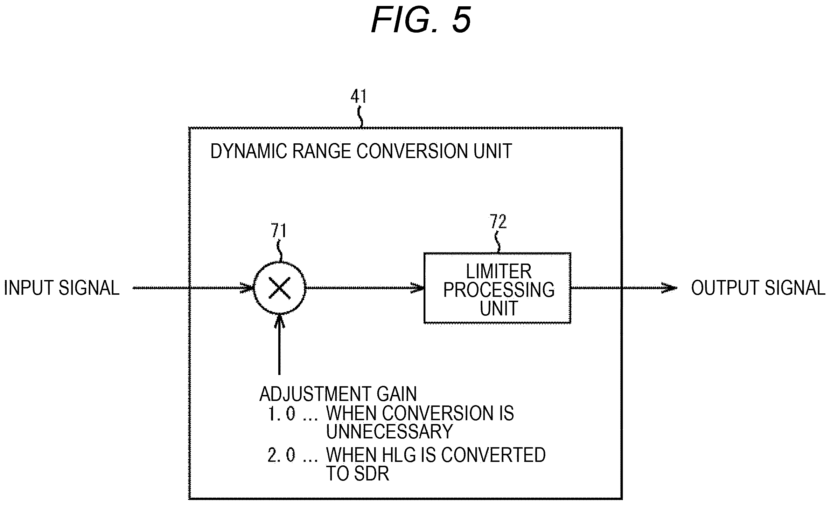

In view of this, the dynamic range conversion unit 41 converts an HDR signal into an SDR signal, and then transmits a video signal. The conversion in this case is a process in which EOTF is applied to each piece of the RGB data of the HDR signal, the RGB type is further converted by a matrix operation, the dynamic range is converted, OETF compliant with the SDR standard is further applied, and the resultant SDR video signal is transmitted. Alternatively, in a simpler process, the HDR video signal may be corrected to be brighter with a fixed adjustment gain, and be transmitted as an SDR signal, as will be described later with reference to Fig. 5.

On the other hand, in a case where the intended use of the output is other than display, or where the recording device 12C or the like is connected, for example, if the conversion process described above is performed, information about the bright portions of the image would be lost, the video signal would be distorted due to saturation or the like, or signal precision would become lower due to re-quantization accompanying the conversion. Therefore, it is not preferable to perform the conversion process described above. In view of this, in a case where the intended use of the HDR output is not display, signal transmission is performed without conversion from an HDR signal into an SDR signal. In this case, the transmission is performed so that the transmitted signal is interpreted as an SDR signal on the receiving side. For this purpose, the HDR output procedures specified in the standard are not carried out and an image signal is transmitted without transmission of any HDR InfoFrame.

The intended use of the output is determined depending on the type of the output device, for example. If the model name of the output device is acquired from the output device information, such as EDID information, for example, and the model name is known as the name of a recording device, the intended use can be considered other than display.

### <Example Configuration of an Output Device>

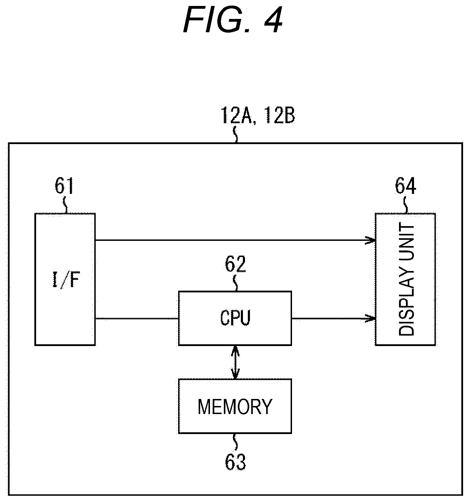

Fig. 4 is a block diagram showing an example configuration of an output device that is a display device.

The output device 12A or 12B, which is a display (an HDR signal-compatible display or an HDR signal-incompatible display, for example, which will be hereinafter collectively referred to as the display), includes an interface 61, a CPU 62, a memory 63, and a display unit 64.

The interface 61 communicates with the HDMI interface 42, to transmit and receive information and data. For example, the interface 61 outputs received data to the display unit 64. The interface 61 supplies received information to the CPU 62, and transmits information from the CPU 62 to the HDMI interface 42.

The CPU 62 controls the respective components of the display 12A or 12B, in accordance with a user operation signal via an operation unit (not shown), a program loaded into the memory 63, and information (such as a request) received from the outside via the interface 61. For example, when the output device information from the HDMI interface 42 is received, the CPU 62 reads the output device information from the memory 63, and outputs the output device information to the HDMI interface 42 via the interface 61.

The memory 63 records necessary information and programs. The display unit 64 displays an image corresponding to data from the interface 61.

### <Example Configuration of the Dynamic Range Conversion Unit>

Fig. 5 is a block diagram showing an example configuration of the dynamic range conversion unit in a case where RGB signals are assumed to be input image signals. Note that the dynamic range conversion unit shown in Fig. 5 is an example, and as described above, various methods can be adopted.

The dynamic range conversion unit 41 includes a gain processing unit 71 and a limiter processing unit 72. The gain processing unit 71 performs gain processing by multiplying an input image signal by an adjustment gain. The signal subjected to the gain processing is output to the limiter processing unit 72.

The adjustment gain is set in accordance with a control signal that is designed by the camera control unit 25 and indicates whether or not conversion is to be performed. Specifically, when conversion is unnecessary, the adjustment gain is set to 1.0, and gain processing is then performed. In other words, an input signal is output directly to the limiter processing unit 72 as it is. On the other hand, when an HLG signal (an HDR signal in the Hybrid Log-Gamma format) is to be converted to an SDR signal, for example, the adjustment gain is set to 2.0, and gain processing is then performed. The signal subjected to the gain processing is output to the limiter processing unit 72.

In a case where an overflow occurs because of the gain processing unit 71, the limiter processing unit 72 performs a process of imposing a limiter on the overflow. The signal subjected to the limiter process is output as an output signal to the HDMI interface 42.

### <Operation of the Imaging Device>

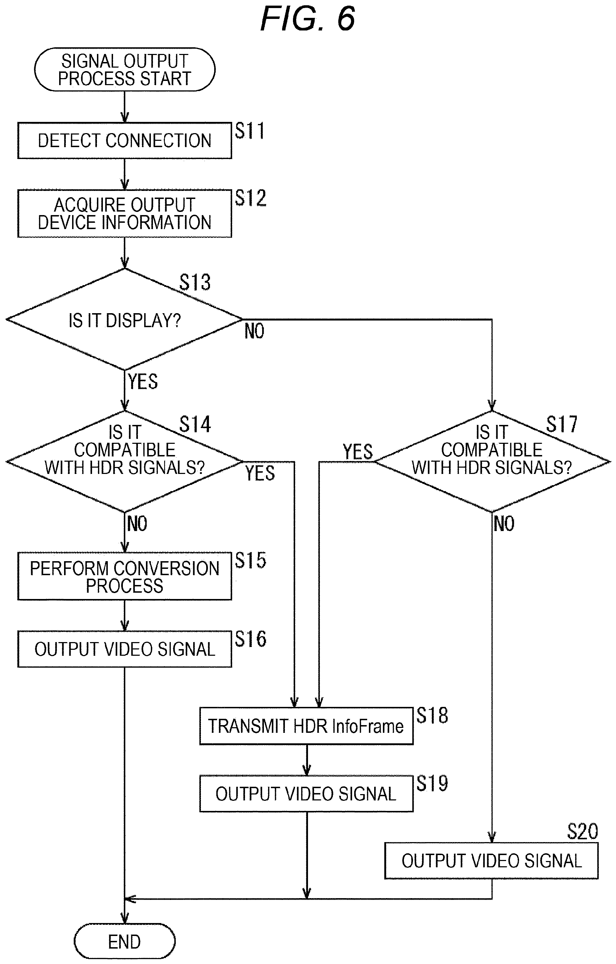

Referring now to a flowchart in Fig. 6, a signal output process to be performed by the imaging device 11 is described.

For example, the user connects the imaging device 11 and the output device 12 with an HDMI cable (not shown). In step S11, when the output device 12 is connected to the imaging device, the HDMI interface 42 detects the connection, and notifies the information acquisition unit 51 of the camera control unit 25 of the detection.

In step S12, the information acquisition unit 51 controls the HDMI interface 42, acquires the output device information from the output device 12, and supplies the acquired output device information to the device type determination unit 52 of the camera control unit 25. For example, in a case where the output device 12 is the HDR signal-compatible display 12A, the interface 61 of the HDR signal-compatible display 12A receives a request for the output device information from the HDMI interface 42, and, in response to the request, the CPU 62 reads the output device information from the memory 63 and transmits the read output device information via the interface 61.

In step S13, the device type determination unit 52 refers to the output device information, and determines whether or not the output device 12 is a display. If the output device 12 is determined to be a display in step S13, the process moves on to step S14. In step S14, the device type determination unit 52 refers to the output device information, and determines whether or not the output device 12 is compatible with HDR signals. If the output device 12 is determined not to be compatible with HDR signals in step S14, the process moves on to step S15.

In step S15, under the control of the camera control unit 25, the dynamic range conversion unit 41 performs a dynamic range conversion process on the video signal from the resolution conversion unit 34 or the memory 35, depending on the output device 12. The dynamic range conversion unit 41 outputs the converted video signal to the HDMI interface 42.

In step S16, the HDMI interface 42 outputs the video signal from the dynamic range conversion unit 41 to the output device 12.

If the output device 12 is determined to be compatible with HDR signals in step S14, the process moves on to step S18.

If the output device 12 is determined not to be a display in step S13, on the other hand, the process moves on to step S17.

In step S17, the device type determination unit 52 refers to the output device information, and determines whether or not the output device 12 is compatible with HDR signals. If the output device 12 is determined to be compatible with HDR signals in step S17, the process moves on to step S18.

In step S18, the camera control unit 25 causes the HDMI interface 42 to transmit the HDR InfoFrame. At this stage, under the control of the camera control unit 25, the dynamic range conversion unit 41 does not perform any dynamic range conversion process on the video signal from the resolution conversion unit 34 or the memory 35, and outputs the video signal to the HDMI interface 42.

In step S19, the HDMI interface 42 outputs the video signal from the dynamic range conversion unit 41 to the output device 12.

If the output device 12 is determined not to be compatible with HDR signals in step S17, the process moves on to step S20. Since the output device 12 is not compatible with HDR signals, the HDR InfoFrame is not transmitted. At this stage, under the control of the camera control unit 25, the dynamic range conversion unit 41 does not perform any dynamic range conversion process on the video signal from the resolution conversion unit 34 or the memory 35, and outputs the video signal to the HDMI interface 42.

In step S20, the HDMI interface 42 outputs the video signal from the dynamic range conversion unit 41 to the output device 12.

Note that, in the imaging device 11, the intended use of the output may be displayed during a reproducing operation, and the intended use of the output may be hidden during a recording operation.

Further, in a case where the connected device is a recorder, or where the intended use of the output is unknown, the user may be instructed to designate the purpose of use of the device.

As described above, the dynamic range conversion process is performed depending on the display device. Thus, an appropriate measure can be taken as dynamic conversion.

Note that, in the example described above, HDMI is used as the interface. However, the present technology can also be applied to SDI connection, network transmission (DLNAI (registered trademark)), WiDi, Displayport, Miracast, wireless connect, or the like.

Further, in the above description, conversion of an HDR signal to an SDR signal has been explained. However, the present technology can also be applied to conversion between HDR signal formats. Specifically, in the example described above, the dynamic range is compressed (or is adjusted to be brighter) when an HDR signal is output to a display that is incompatible with HDR signals but compatible with SDR signals. However, the present technology can also be applied in the cases described below.

Specifically, the present technology can be applied in a case where the dynamic range is expanded when an SDR signal is output to an HDR signal-compatible display. The present technology can also be applied in a case where tone mapping is performed when an HDR (HLG) signal is output to a display compatible with HDR (PQ curve) signals. Furthermore, the present technology can be applied in a case where tone mapping is performed when an image signal having Log characteristics is output to a television device.

### <Other Examples of Image Signal Conversion>

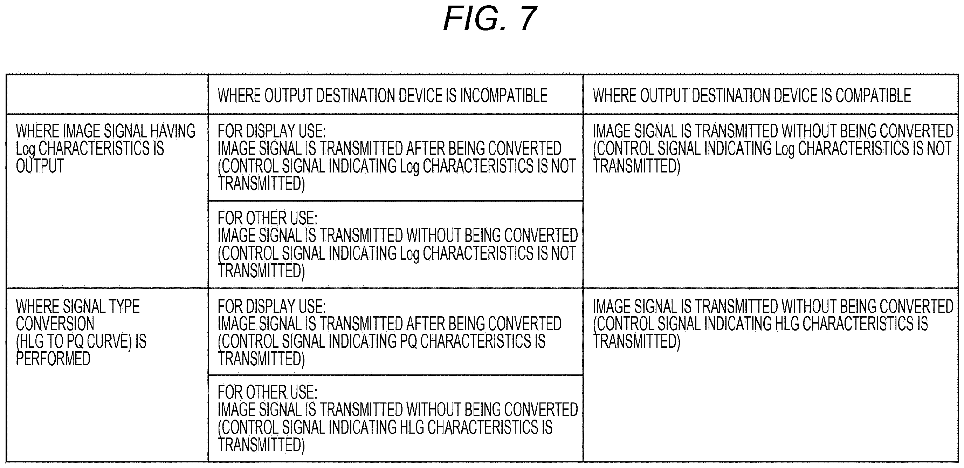

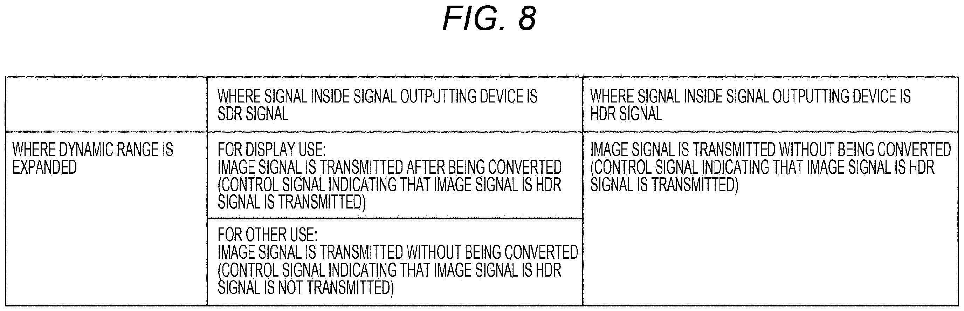

Figs. 7 and 8 are tables for explaining other examples of image signal conversion to which the present technology is applied. First, in Fig. 7, cases where an image signal having Log characteristics is output, and cases where signal type conversion (HLG to PQ curve) is performed are shown as example cases where a signal with which the output destination device (an output device, for example) is not compatible is converted into a signal with which the output destination device is compatible.

In a case where an image signal having Log characteristics is output, if the output destination device is incompatible with the image signal, the image signal is converted and transmitted (any control signal indicating the Log characteristics is not transmitted) for display use. For any other use, the image signal is transmitted without being converted (any control signal indicating the Log characteristics is not transmitted). If the output destination device is compatible with the image signal, on the other hand, the image signal is transmitted without being converted (a control signal indicating the Log characteristics is transmitted).

Further, in a case where signal type conversion (HLG to PQ curve) is performed, if the output destination device is incompatible with the image signal, the image signal is converted and transmitted (a control signal indicating PQ characteristics is transmitted) for display use. For any other use, the image signal is transmitted without being converted (a control signal indicating HLG characteristics is transmitted). If the output destination device is compatible with the image signal, on the other hand, the image signal is transmitted without being converted (a control signal indicating the Log characteristics is transmitted).

Further, in Fig. 8, cases where the dynamic range is expanded are described as example cases where the output destination device is compatible with a large number of types of signal.

In a case where the dynamic range is expanded, if the signal inside the signal outputting device (the imaging device 11, for example) is an SDR signal, the image signal is converted and transmitted (a control signal indicating that the image signal is an HDR signal is transmitted) for display use. For the other use, the image signal is transmitted without being converted (any control signal indicating that the image signal is an HDR signal is not transmitted). In a case where the signal inside the signal outputting device is an HDR signal, on the other hand, the image signal is transmitted without being converted (a control signal indicating that the image signal is an HDR signal is transmitted).

Further, in the examples described above, dynamic range conversion has been described as examples of image signal conversion. However, the above conversion can be applied to color gamut (color space) conversion, for example.

In this case, the YC generation unit 33, for example, generates a linear image signal obtained by performing an inverse gamma correction process on R, G, and B image signals from the demosaicing unit 32, in response to the gamma correction process performed by the pre-processing unit 31. The YC generation unit 33 can perform color gamut conversion on the linear image signal through linear matrix processing and a gamma correction process. A luminance signal and a color difference signal are then generated from the image signals subjected to the color gamut conversion. Note that, in a case where the pre-processing unit 32 does not perform the gamma correction process, for example, the inverse gamma correction at the YC generation unit 33 can be skipped.

In the above example, the dynamic range conversion unit 41 controls the color gamut conversion process on a color gamut different from the color gamut subjected to the above described conversion, in accordance with a result of the determination made by the device type determination unit 52. In other words, in a case where the device type determination unit 52 refers to the output device information and determines the output device 12 to be a display, the dynamic range conversion unit 41 performs color gamut conversion in accordance with the capability of the display. In a case where the device type determination unit 52 determines the output device 12 not to be a display, the dynamic range conversion unit 41 does not perform the color gamut conversion process.

Here, the color gamuts include ACES/BT.2020/DCI-P3/BT.709 (mainly in the case of moving images), ProPhotoRGB/AdobeRGB/sRGB (mainly in the case of still images), S-Gamut3/S-Gamut3.cine/S-Gamut2, and the like. Conversion can be performed between these color gamuts.

Note that the above example is useful both in conversion from a wide color gamut to a narrow color gamut and in conversion from a narrow color gamut to a wide color gamut.

In the above description, the output process from the imaging device has been explained. However, the device that performs the output process is not necessarily an imaging device, and may be any device that performs a process of outputting signals, such as a recording device or a computer, for example. Further, the output device is not necessarily a display or a recording device, but may be formed with a measuring device, an analyzer, an editing device, a converter, or the like.

As described above, in the present technology, a check is made to determine whether or not to perform a conversion process, depending on the output device. Therefore, according to the present technology, when the intended use of the output is recording, the dynamic range of the output signal is appropriately converted, and thus, convenience of the user can be increased.

In addition to that, at the time of recording on an external recording device, streams are saved with intended quality.

Further, HDR signals can be recorded even with a recording device that is not compatible with HDR display.

In addition to that, dynamic range conversion is automatically performed, depending on the intended use, and user convenience can be increased.

Furthermore, in a case where the output device is connected to a recording device for recording, it is possible to prevent the output device from unintentionally degrading the quality of recording signals by transmitting signals to be output for viewing.

Also, in a case where the output device is connected to a television device for viewing, the signal processing device can be prevented from transmitting signals to be output for recording. Thus, unintendedly dark display can be avoided.

Note that the present technology can be embodied not only by hardware but also by software.

### <Example Configuration of a Computer>

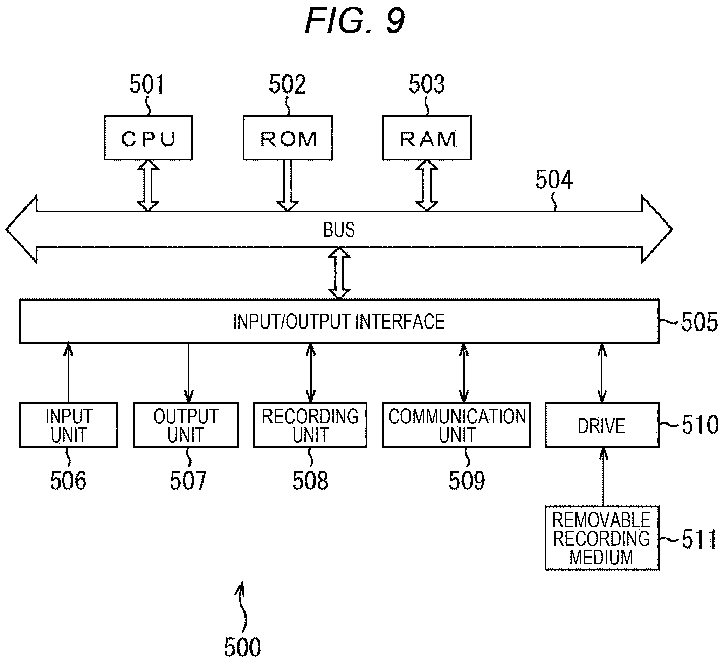

Fig. 9 is a block diagram showing an example hardware configuration of a computer to which the present technology is applied.

In a computer 500, a CPU 501, a read only memory (ROM) 502, and a random access memory (RAM) 503 are connected to one another by a bus 504.

An input/output interface 505 is further connected to the bus 504. An input unit 506, an output unit 507, a storage unit 508, a communication unit 509, and a drive 510 are connected to the input/output interface 505.

The input unit 506 is formed with a keyboard, a mouse, a microphone, and the like. The output unit 507 is formed with a display, a speaker, and the like. The storage unit 508 is formed with a hard disk, a nonvolatile memory, or the like. The communication unit 509 is formed with a network interface or the like. The drive 510 drives a removable recording medium 511 such as a magnetic disc, an optical disc, a magnetooptical disc, or a semiconductor memory.

In the computer 500 having the above described configuration, the CPU 501 loads a program stored in the storage unit 508 into the RAM 503 via the input/output interface 505 and the bus 504, for example, and executes the program. As a result, the series of processes described above is performed.

The program to be executed by the computer (the CPU 501) can be recorded on the removable recording medium 511, and be provided. For example, the removable recording medium 511 is a packaged medium or the like that is formed with a magnetic disk (including a flexible disk), an optical disk (such as a Compact Disc-read only memory (CD-ROM) or a digital versatile disc (DVD)), a magnetooptical disk, a semiconductor memory, or the like. Alternatively, the program can be provided via a wired or wireless transmission medium, such as a local area network, the Internet, or digital satellite broadcasting.

In the computer, the program can be installed into the storage unit 508 via the input/output interface 505 when the removable recording medium 511 is mounted on the drive 510. Alternatively, the program may be received by the communication unit 509 through a wired or wireless transmission medium, and be installed into the storage unit 508. Other than the above, the program may be installed beforehand into the ROM 502 or the storage unit 508.

Note that the program to be executed by the computer may be a program for performing processes in chronological order in accordance with the sequence described in this specification, or may be a program for performing processes in parallel or performing a process in a necessary stage, such as when there is a call.

Also, in this specification, steps describing a program recorded on a recording medium include processes to be performed in parallel or independently of one another if not necessarily in chronological order, as well as processes to be performed in chronological order in accordance with the sequence described herein.

Further, in this specification, a system refers to an entire apparatus formed with a plurality of devices.

For example, the present disclosure can be embodied in a cloud computing configuration in which one function is shared among a plurality of devices via a network, and processing is performed by the devices cooperating with one another.

Furthermore, any configuration described above as one device (or processing unit) may be divided into a plurality of devices (or processing units). Conversely, any configuration described above as a plurality of devices (or processing units) may be combined into one device (or processing unit). Furthermore, it is of course possible to add components other than those described above to the configuration of any of the devices (or processing units). Further, some components of a device (or processing unit) may be incorporated into the configuration of another device (or processing unit) as long as the configuration and the functions of the entire system remain substantially the same. That is, the present technology is not limited to the embodiments described above, but various modifications may be made to them without departing from the scope of the present technology.

### <Example Applications>

The technology according to the present disclosure can be applied to various products. For example, the techniques according to the present disclosure may be applied to an operating room system.

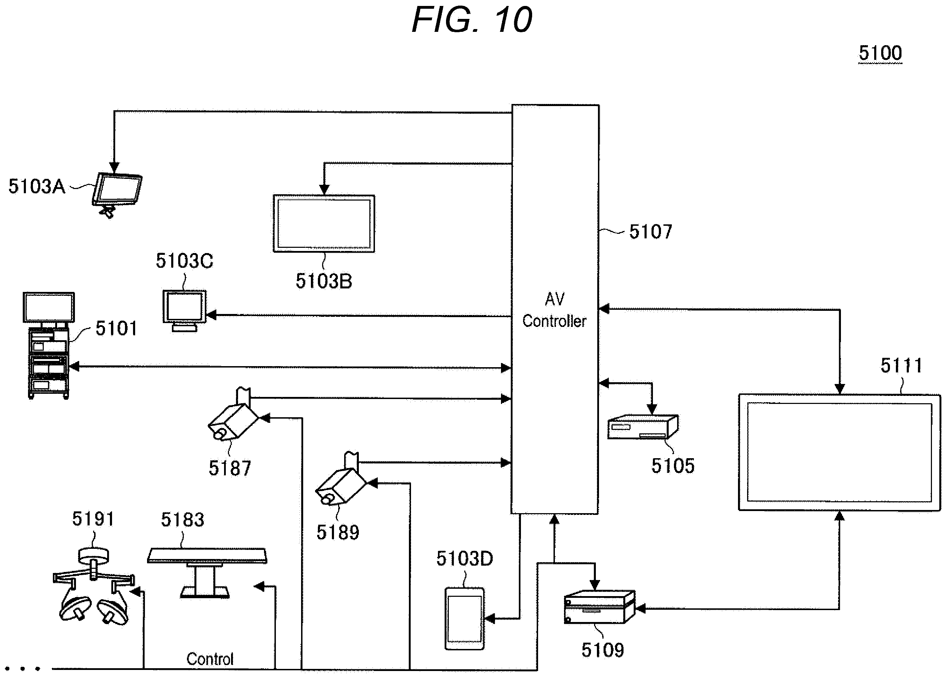

Fig. 10 is a diagram schematically showing the overall configuration of an operating room system 5100 to which the technology according to the present disclosure can be applied. As shown in Fig. 10, the operating room system 5100 is formed with a group of devices that are installed in an operating room and are connected so as to be able to cooperate with one another via an audiovisual controller (AV controller) 5107 and an operating room control device 5109.

Various devices can be installed in the operating room. Fig. 10 shows, as an example, a device group 5101 of various devices for endoscopic surgery, a ceiling camera 5187 that is provided on the ceiling of the operating room and captures an image of the hands of the operator, a surgical field camera 5189 that is provided on the ceiling of the operating room and captures an image of the entire operating room, a plurality of display devices 5103A through 5103D, a recorder 5105, a patient bed 5183, and lightings 5191.

Here, of these devices, the device group 5101 belongs to an endoscopic surgery system 5113 described later, and includes an endoscope, a display device for displaying an image captured by the endoscope, and the like. Each device belonging to the endoscopic surgery system 5113 is also referred to as a medical device. Meanwhile, the display devices 5103A through 5103D, the recorder 5105, the patient bed 5183, and the lightings 5191 are devices that are installed in the operating room, for example, separately from the endoscopic surgery system 5113. Each of these devices not belonging to the endoscopic surgery system 5113 is also referred to as a non-medical device. The audiovisual controller 5107 and/or the operating room control device 5109 cooperatively control operations of these medical devices and non-medical devices.

The audiovisual controller 5107 comprehensively controls processing relating to image display in the medical devices and non-medical devices. Specifically, of the devices included in the operating room system 5100, the device group 5101, the ceiling camera 5187, and the surgical field camera 5189 may be devices that have the function of transmitting the information (hereinafter also referred to as the display information) to be displayed during surgery (these devices will be hereinafter also referred to as transmission source devices). Further, the display devices 5103A through 5103D may be devices to which the display information is output (these devices will be hereinafter also referred to as output destination devices). Furthermore, the recorder 5105 may be a device that can be both a transmission source device and an output destination device. The audiovisual controller 5107 has the function of controlling operations of the transmission source device and the output destination device, and acquiring the display information from the transmission source device. The audiovisual controller 5107 also has the function of transmitting the display information to the output destination device, and causing the output destination device to display or record the display information. Note that the display information is various kinds of images captured during surgery, various kinds of information about surgery (physical information about the patient, information about the past examination results, and surgical means, and the like, for example), and the like.

Specifically, information about an image of the surgical site in a body cavity of the patient, which has been captured by an endoscope, can be transmitted as the display information from the device group 5101 to the audiovisual controller 5107. Also, information about an image of the hands of the operator, which has been captured by the ceiling camera 5187, can be transmitted as the display information from the ceiling camera 5187. Further, information about an image showing the entire operating room, which has been captured by the surgical field camera 5189, can be transmitted as the display information from the surgical field camera 5189. Note that, in a case where there is another device that has an imaging function in the operating room system 5100, the audiovisual controller 5107 may acquire information about an image captured by the other device as the display information from the other device.

Alternatively, in the recorder 5105, for example, information about these images captured in the past is recorded by the audiovisual controller 5107. The audiovisual controller 5107 can acquire information about the images captured in the past as the display information from the recorder 5105. Note that various kinds of information about surgery may also be recorded beforehand in the recorder 5105.

The audiovisual controller 5107 causes at least one of the display devices 5103A through 5103D as the output destination devices to display the acquired display information (which is an image captured during surgery or various kinds of information relating to the surgery). In the example shown in the drawing, the display device 5103A is a display device suspended from the ceiling of the operating room, the display device 5103B is a display device installed on a wall surface of the operating room, the display device 5103C is a display device installed on a desk in the operating room, and the display device 5103D is a mobile device (a tablet personal computer (PC), for example) having a display function.

Although not shown in Fig. 10, the operating room system 5100 may also include devices installed outside the operating room. The devices outside the operating room may be servers connected to a network constructed inside and outside the hospital, PCs being used by medical staff, projectors installed in conference rooms of the hospital, and the like, for example. In a case where there are external devices outside the hospital, the audiovisual controller 5107 can cause a display device at some other hospital to display the display information via a television conference system or the like for remote medical care.

The operating room control device 5109 comprehensively controls the processing other than the processing relating to image display in non-medical devices. For example, the operating room control device 5109 controls driving of the patient bed 5183, the ceiling camera 5187, the surgical field camera 5189, and the lightings 5191.

A centralized operation panel 5111 is provided in the operating room system 5100. Through the centralized operation panel 5111, the user can issue an image display instruction to the audiovisual controller 5107, or issue an instruction about a non-medical device operation to the operating room control device 5109. The centralized operation panel 5111 is formed by providing a touch panel on the display surface of a display device.

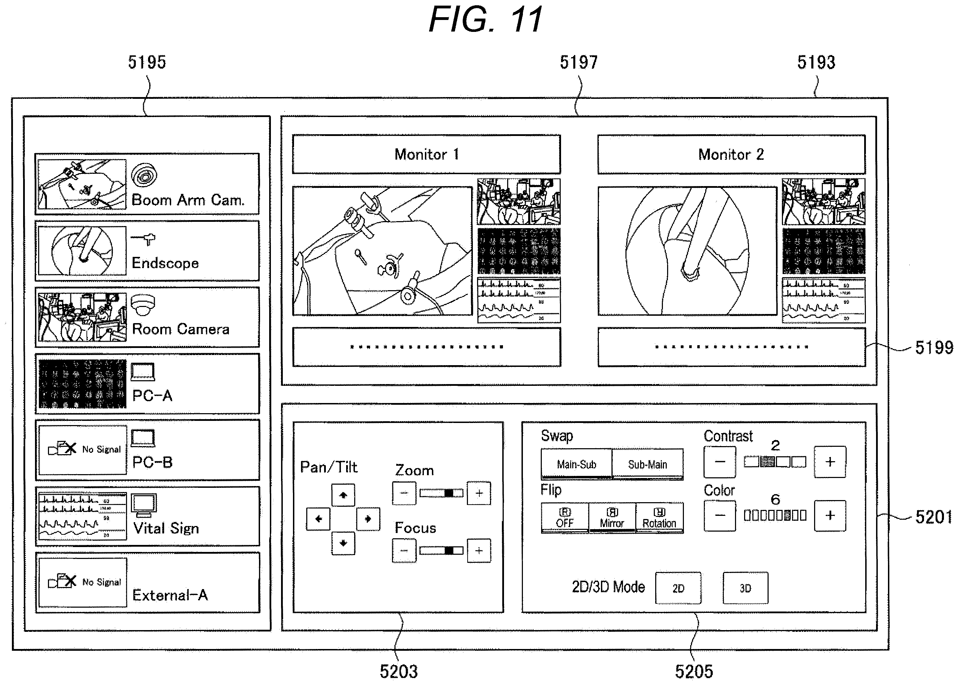

Fig. 11 is a view of an example of display on an operation screen of the centralized operation panel 5111. Fig. 11 shows an operation screen as an example in a case where two display devices are provided as the output destination devices in the operating room system 5100. As shown in Fig. 11, an operation screen 5193 includes a source selection area 5195, a preview area 5197, and a control area 5201.

In the source selection area 5195, the transmission source devices provided in the operating room system 5100 are displayed, being linked to thumbnail screens showing the display information held by the transmission source devices. The user can select the display information to be displayed on a display device from among the transmission source devices displayed in the source selection area 5195.

In the preview area 5197, previews of screens to be displayed on the two display devices (Monitor 1 and Monitor 2) as the output destination devices are displayed. In the example shown in the drawing, four images are PinP displayed on one display device. The four images correspond to the display information transmitted from the transmission source device selected in the source selection area 5195. Of the four images, one is displayed relatively large as the main image, and the remaining three are displayed relatively small as sub images. The user can exchange the main image with a sub image by appropriately selecting an area from among the areas in which the four images are displayed. Further, a status display area 5199 is provided under the area in which the four images are displayed, and the status display area 5199 can display the status relating to the surgery (the time elapsed since the start of the surgery, the physical information about the patient, and the like, for example).

The control area 5201 includes a source operation area 5203 in which graphical user interface (GUI) components for operating a transmission source device are displayed, and an output destination operation area 5205 in which GUI components for operating an output destination device are displayed. In the example shown in the drawing, GUI components for performing various operations (panning, tilting, and zooming) on a camera of a transmission source device having an imaging function is provided in the source operation area 5203. By appropriately selecting one of these GUI components, the user can control the operation of the camera of the transmission source device. Note that, although not shown in the drawing, in a case where the transmission source device selected in the source selection area 5195 is a recorder (or where an image recorded in a recorder in the past is displayed in the preview area 5197), GUI components for performing operations such as reproducing, stopping, rewinding, and fast-forwarding of the image may be provided in the source operation area 5203.

Further, GUI components for performing various operations (swapping, flipping, color adjustment, contrast adjustment, and switching between 2D display and 3D display) for display on a display device as an output destination device are provided in the output destination operation area 5205. By appropriately selecting one of these GUI components, the user can control display on a display device.

Note that the operation screen to be displayed on the centralized operation panel 5111 is not limited to the example shown in the drawing, and the user may be allowed to input operations to the respective devices that can be controlled by the audiovisual controller 5107 and the operating room control device 5109 included in the operating room system 5100, via the centralized operation panel 5111.

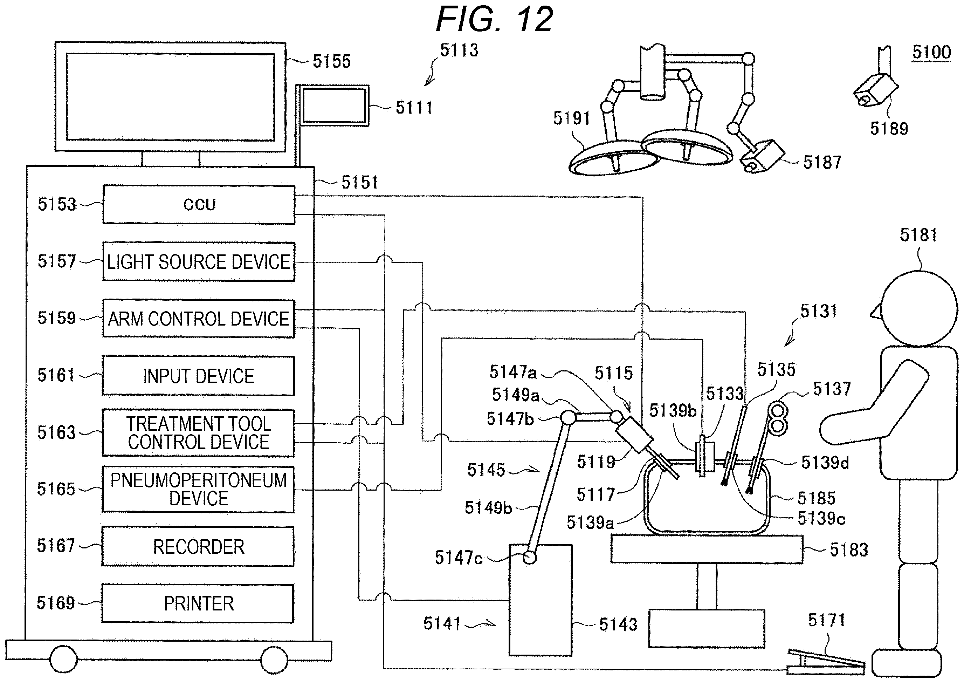

Fig. 12 is a diagram showing an example situation of surgery in which the operating room system described above is used. The ceiling camera 5187 and the surgical field camera 5189 are provided on the ceiling of the operating room, and can capture images of the hands of the operator (physician) 5181 performing treatment on the affected site of the patient 5185 on the patient bed 5183, and the entire operating room. The ceiling camera 5187 and the surgical field camera 5189 may have a magnification adjustment function, a focal length adjustment function, an imaging direction adjustment function, and the like. The lightings 5191 are provided on the ceiling of the operating room, and illuminate at least the hands of the operator 5181. The lightings 5191 may be capable of appropriately adjusting the amount of illuminating light, the wavelength (color) of the illuminating light, the light irradiation direction, and the like.

The endoscopic surgery system 5113, the patient bed 5183, the ceiling camera 5187, the surgical field camera 5189, and the lightings 5191 are connected via the audiovisual controller 5107 and the operating room control device 5109 (not shown in Fig. 12) so as to be able to cooperate with one another, as shown in Fig. 10. The centralized operation panel 5111 is provided in the operating room, and, as described above, the user can appropriately operate these devices existing in the operating room via the centralized operation panel 5111.

In the description below, the configuration of the endoscopic surgery system 5113 is explained in detail. As shown in the drawing, the endoscopic surgery system 5113 includes an endoscope 5115, other surgical tools 5131, a support arm device 5141 that supports the endoscope 5115, and a cart 5151 in which various kinds of devices for endoscopic surgery are installed.

In endoscopic surgery, the abdominal wall is not cut to open the abdomen, but is punctured with a plurality of cylindrical puncture devices called trocars 5139a through 5139d. Through the trocars 5139a through 5139d, the lens barrel 5117 of the endoscope 5115 and the other surgical tools 5131 are then inserted into a body cavity of the patient 5185. In the example shown in the drawing, a pneumoperitoneum tube 5133, an energy treatment tool 5135, and forceps 5137 are inserted as the other surgical tools 5131 into the body cavity of the patient 5185. Further, the energy treatment tool 5135 is a treatment tool for performing incision and detachment of tissue, blood vessel sealing, or the like, using a high-frequency current or ultrasonic vibration. However, the surgical tools 5131 shown in the drawing are merely an example, and various other surgical tools that are generally used for endoscopic surgery such as tweezers and a retractor, for example, may be used as the surgical tools 5131.

An image of the surgical site in the body cavity of the patient 5185 imaged by the endoscope 5115 is displayed on a display device 5155. The operator 5181 performs treatment such as cutting off the affected site with the energy treatment tool 5135 and the forceps 5137, for example, while viewing the image of the surgical site displayed on the display device 5155 in real time. Note that, although not shown in the drawing, the pneumoperitoneum tube 5133, the energy treatment tool 5135, and the forceps 5137 are supported by the operator 5181 or an assistant or the like during surgery.

### (Support Arm Device)

The support arm device 5141 includes an arm unit 5145 extending from a base unit 5143. In the example shown in the drawing, the arm unit 5145 includes joint portions 5147a, 5147b, and 5147c, and links 5149a and 5149b, and is driven under the control of an arm control device 5159. The endoscope 5115 is supported by the arm unit 5145, and its position and posture are controlled. Thus, the endoscope 5115 can be secured in a stable position.

### (Endoscope)

The endoscope 5115 includes a lens barrel 5117 that has a region of a predetermined length from the top end to be inserted into a body cavity of the patient 5185, and a camera head 5119 connected to the base end of the lens barrel 5117. In the example shown in the drawing, the endoscope 5115 is formed as a so-called rigid scope having a rigid lens barrel 5117. However, the endoscope 5115 may be formed as a so-called flexible scope having a flexible lens barrel 5117.

At the top end of the lens barrel 5117, an opening into which an objective lens is inserted is provided. A light source device 5157 is connected to the endoscope 5115, and light generated by the light source device 5157 is guided to the top end of the lens barrel by a light guide extending inside the lens barrel 5117, and is emitted toward the current observation target in the body cavity of the patient 5185 via the objective lens. Note that the endoscope 5115 may be a direct-view mirror, an oblique-view mirror, or a side-view mirror.

An optical system and an imaging element are provided inside the camera head 5119, and reflected light (observation light) from the current observation target is converged on the imaging element by the optical system. The observation light is photoelectrically converted by the imaging element, and an electrical signal corresponding to the observation light, or an image signal corresponding to the observation image, is generated. The image signal is transmitted as RAW data to a camera control unit (CCU) 5153. Note that the camera head 5119 is made to drive the optical system as appropriate, to achieve a function to adjust magnification and focal length.

Note that, to cope with stereoscopic viewing (3D display) or the like, for example, a plurality of imaging elements may be provided in the camera head 5119. In this case, a plurality of relay optical systems are provided inside the lens barrel 5117, to guide the observation light to each of the plurality of imaging elements.

### (Various Devices Installed in the Cart)

The CCU 5153 is formed with a central processing unit (CPU), a graphics processing unit (GPU), or the like, and collectively controls operations of the endoscope 5115 and the display device 5155. Specifically, the CCU 5153 performs various kinds of image processing, such as a development process (demosaicing process), for example, for displaying an image based on an image signal received from the camera head 5119. The CCU 5153 supplies the image signal subjected to the image processing, to the display device 5155. The audiovisual controller 5107 shown in Fig. 10 is also connected to the CCU 5153. The CCU 5153 also supplies the image signal subjected to the image processing, to the audiovisual controller 5107. The CCU 5153 further transmits a control signal to the camera head 5119, and controls its driving. The control signal may contain information about imaging conditions such as magnification and focal length. The information about the imaging conditions may be input via an input device 5161, or may be input via the above described centralized operation panel 5111.

Under the control of the CCU 5153, the display device 5155 displays the image based on the image signal subjected to the image processing by the CCU 5153. In a case where the endoscope 5115 is compatible with high-resolution imaging such as 4K (the number of pixels in a horizontal direction × the number of pixels in a vertical direction: 3840 × 2160) or 8K (the number of pixels in a horizontal direction × the number of pixels in a vertical direction: 7680 × 4320), and/or is compatible with 3D display, for example, the display device 5155 may be a display device that is capable of high-resolution display, and/or is capable of 3D display, accordingly. In a case where the endoscope 5115 is compatible with high-resolution imaging such as 4K or 8K, a display device of 55 inches or larger in size is used as the display device 5155, to obtain a more immersive feeling. Further, a plurality of display devices 5155 of various resolutions and sizes may be provided, depending on the purpose of use.

The light source device 5157 is formed with a light source such as a light emitting diode (LED), for example, and supplies the endoscope 5115 with illuminating light for imaging the surgical site.

The arm control device 5159 is formed with a processor such as a CPU, for example, and operates in accordance with a predetermined program, to control the driving of the arm unit 5145 of the support arm device 5141 in accordance with a predetermined control method.

The input device 5161 is an input interface to the endoscopic surgery system 5113. The user can input various kinds of information and instructions to the endoscopic surgery system 5113 via the input device 5161. For example, the user inputs various kinds of information about surgery, such as the patient's physical information and information about the surgical method, via the input device 5161. Further, via the input device 5161, the user inputs an instruction for driving the arm unit 5145, an instruction for changing the imaging conditions (the type of illuminating light, magnification, focal length, and the like) for the endoscope 5115, an instruction for driving the energy treatment tool 5135, and the like, for example.

The input device 5161 is not limited to any particular type, and the input device 5161 may be an input device of any known type. For example, the input device 5161 may be a mouse, a keyboard, a touch panel, a switch, a foot switch 5171, and/or a lever or the like. In a case where a touch panel is used as the input device 5161, the touch panel may be provided on the display surface of the display device 5155.

Alternatively, the input device 5161 is a device worn by a user such as a spectacle-type wearable device or a head-mounted display (HMD), for example, and various inputs are made in accordance with gestures and lines of sight of the user detected by these devices. The input device 5161 also includes a camera capable of detecting motion of the user, and various inputs are made in accordance with gestures and lines of sight of the user detected from a video image captured by the camera. Further, the input device 5161 includes a microphone capable of picking up the voice of the user, and various inputs are made with voice through the microphone. As the input device 5161 is designed to be capable of inputting various kinds of information in a non-contact manner as described above, a user (the operator 5181, for example) in a clean area can operate a device in an unclean area in a non-contact manner. Further, as the user can operate a device without releasing the surgical tool already in his/her hand, user convenience is increased.

A treatment tool control device 5163 controls driving of the energy treatment tool 5135 for tissue cauterization, incision, blood vessel sealing, or the like. A pneumoperitoneum device 5165 injects a gas into a body cavity of the patient 5185 via the pneumoperitoneum tube 5133 to inflate the body cavity, for the purpose of securing the field of view of the endoscope 5115 and the working space of the operator. A recorder 5167 is a device capable of recording various kinds of information about the surgery. A printer 5169 is a device capable of printing various kinds of information relating to the surgery in various formats such as text, images, graphics, and the like.

In the description below, the components particularly characteristic of the endoscopic surgery system 5113 are explained in greater detail.

### (Support Arm Device)

The support arm device 5141 includes the base unit 5143 as the base, and the arm unit 5145 extending from the base unit 5143. In the example shown in the drawing, the arm unit 5145 includes the plurality of joint portions 5147a, 5147b, and 5147c, and the plurality of links 5149a and 5149b connected by the joint portion 5147b. For simplicity, Fig. 12 shows the configuration of the arm unit 5145 in a simplified manner. In practice, the shapes, the number, and the arrangement of the joint portions 5147a through 5147c and the links 5149a and 5149b, the directions of the rotation axes of the joint portions 5147a through 5147c, and the like are appropriately set so that the arm unit 5145 can have a desired degree of freedom. For example, the arm unit 5145 is preferably designed to have a degree of freedom equal to or higher than six degrees. This allows the endoscope 5115 to freely move within the movable range of the arm unit 5145. Thus, it becomes possible to insert the lens barrel 5117 of the endoscope 5115 into the body cavity of the patient 5185 from a desired direction.

Actuators are provided for the joint portions 5147a through 5147c, and the joint portions 5147a through 5147c are designed to be able to rotate about a predetermined rotation axis when the actuators are driven. As the driving of the actuators is controlled by the arm control device 5159, the rotation angles of the respective joint portions 5147a through 5147c are controlled, and thus, the driving of the arm unit 5145 is controlled. In this manner, the position and the posture of the endoscope 5115 can be controlled. At this stage, the arm control device 5159 can control the driving of the arm unit 5145 by various known control methods such as force control or position control.

For example, the operator 5181 may make an appropriate operation input via the input device 5161 (including the foot switch 5171), so that the arm control device 5159 appropriately can control the driving of the arm unit 5145 in accordance with the operation input, and the position and the posture of the endoscope 5115 can be controlled. Through this control, the endoscope 5115 at the distal end of the arm unit 5145 can be moved from a position to a desired position, and can be supported in a fixed manner at the desired position after the movement. Note that the arm unit 5145 may be operated by a so-called master-slave mode. In this case, the arm unit 5145 can be remotely operated by the user via the input device 5161 installed at a place away from the operating room.

Alternatively, in a case where force control is adopted, the arm control device 5159 is subjected to external force from the user, and performs so-called power assist control to drive the actuators of the respective joint portions 5147a through 5147c so that the arm unit 5145 moves smoothly with the external force. Because of this, when the user moves the arm unit 5145 while directly touching the arm unit 5145, the arm unit 5145 can be moved with a relatively small force. Thus, it becomes possible to more intuitively move the endoscope 5115 with a simpler operation, and increase user convenience accordingly.

Here, in general endoscopic surgery, the endoscope 5115 is supported by a medical doctor called a scopist. In a case where the support arm device 5141 is used, on the other hand, it is possible to secure the position of the endoscope 5115 with a higher degree of precision without any manual operation. Thus, an image of the surgical site can be obtained in a constant manner, and surgery can be performed smoothly.

Note that the arm control device 5159 is not necessarily installed in the cart 5151. Further, the arm control device 5159 is not necessarily one device. For example, the arm control device 5159 may be provided in each of the joint portions 5147a through 5147c of the arm unit 5145 of the support arm device 5141, and the plurality of arm control devices 5159 may cooperate with one another, to control the driving of the arm unit 5145.

### (Light Source Device)

The light source device 5157 supplies the endoscope 5115 with illuminating light for imaging the surgical site. The light source device 5157 is formed with an LED, a laser light source, or a white light source that is a combination of an LED and a laser light source, for example. Here, in a case where the white light source is formed with a combination of RGB laser light sources, the output intensity and the output timing of each color (each wavelength) can be controlled with high precision. Accordingly, the white balance of a captured image can be adjusted at the light source device 5157. Alternatively, in this case, laser light from each of the RGB laser light sources may be emitted onto the current observation target in a time-division manner, and driving of the imaging element of the camera head 5119 may be controlled in synchronization with the timing of the light emission. Thus, images corresponding to the respective RGB colors can be captured in a time-division manner. According to the method, a color image can be obtained without any color filter provided in the imaging element.

The driving of the light source device 5157 may also be controlled so that the intensity of light to be output is changed at predetermined time intervals. The driving of the imaging element of the camera head 5119 is controlled in synchronism with the timing of the change in the intensity of the light, and images are acquired in a time-division manner and are then combined. Thus, a high dynamic range image with no black portions and no white spots can be generated.

The light source device 5157 may also be designed to be capable of supplying light of a predetermined wavelength band compatible with special light observation. In special light observation, light of a narrower band than the illuminating light (or white light) at the time of normal observation is emitted, with the wavelength dependence of light absorption in body tissue being taken advantage of, for example. As a result, so-called narrow band imaging is performed to image predetermined tissue such as a blood vessel in a mucosal surface layer or the like, with high contrast. Alternatively, in the special light observation, fluorescence observation for obtaining an image with fluorescence generated through emission of excitation light may be performed. In fluorescence observation, excitation light is emitted onto body tissue so that the fluorescence from the body tissue can be observed (autofluorescence observation). Alternatively, a reagent such as indocyanine green (ICG) is locally injected into body tissue, and excitation light corresponding to the fluorescence wavelength of the reagent is emitted onto the body tissue so that a fluorescent image can be obtained, for example. The light source device 5157 can be designed to be capable of suppling narrowband light and/or excitation light compatible with such special light observation.

### (Camera Head and CCU)

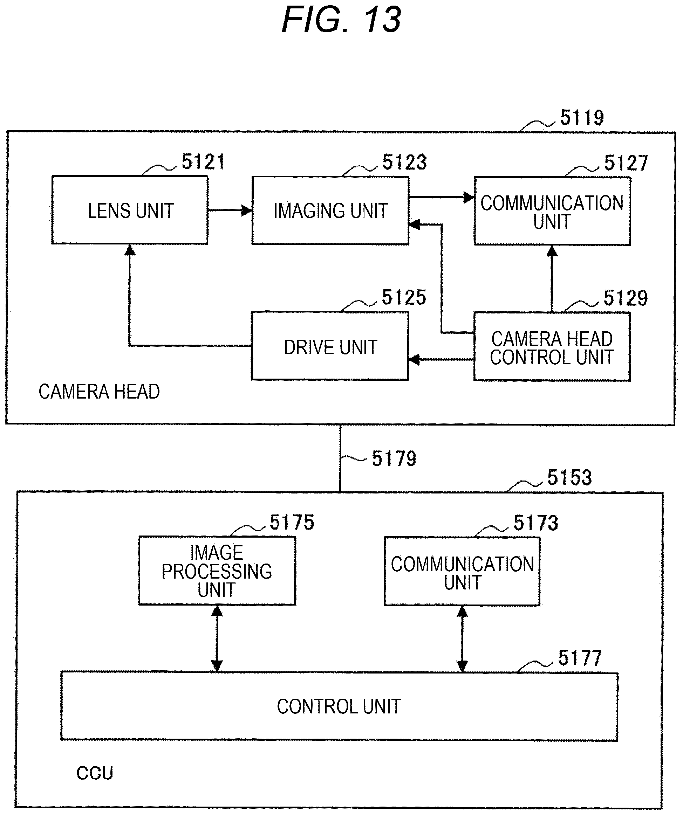

Referring now to Fig. 13, the functions of the camera head 5119 and the CCU 5153 of the endoscope 5115 are described in greater detail. Fig. 13 is a block diagram showing an example of the functional configurations of the camera head 5119 and the CCU 5153 shown in Fig. 12.

As shown in Fig. 13, the camera head 5119 includes, as its functions, a lens unit 5121, an imaging unit 5123, a drive unit 5125, a communication unit 5127, and a camera head control unit 5129. Meanwhile, the CCU 5153 includes, as its functions, a communication unit 5173, an image processing unit 5175, and a control unit 5177. The camera head 5119 and the CCU 5153 are connected by a transmission cable 5179 so that bidirectional communication can be performed.

First, the functional configuration of the camera head 5119 is described. The lens unit 5121 is an optical system provided at the connecting portion with the lens barrel 5117. Observation light captured from the top end of the lens barrel 5117 is guided to the camera head 5119, and enters the lens unit 5121. The lens unit 5121 is formed with a combination of a plurality of lenses including a zoom lens and a focus lens. The optical characteristics of the lens unit 5121 are adjusted so as to collect the observation light onto the light receiving surface of the imaging element of the imaging unit 5123. Further, the zoom lens and the focus lens are designed so that the positions thereof on the optical axis can move to adjust the magnification and the focal point of a captured image.

The imaging unit 5123 is formed with an imaging element, and is disposed at a stage subsequent to the lens unit 5121. The observation light having passed through the lens unit 5121 is gathered on the light receiving surface of the imaging element, and an image signal corresponding to the observation image is generated through photoelectric conversion. The image signal generated by the imaging unit 5123 is supplied to the communication unit 5127.

The imaging element forming the imaging unit 5123 is an image sensor of a complementary metal oxide semiconductor (CMOS) type, for example, and the image sensor to be used here has a Bayer array and is capable of color imaging. Note that the imaging element may be an imaging element compatible with capturing images of high resolution such as 4K or higher, for example. As a high-resolution image of the surgical site is obtained, the operator 5181 can grasp the state of the surgical site in greater detail, and proceed with the surgery more smoothly.

Further, the imaging element of the imaging unit 5123 is designed to include a pair of imaging elements for acquiring right-eye and left-eye image signals compatible with 3D display. As the 3D display is conducted, the operator 5181 can grasp more accurately the depth of the living tissue at the surgical site. Note that, in a case where the imaging unit 5123 is of a multiple-plate type, a plurality of lens units 5121 are provided for the respective imaging elements.

Further, the imaging unit 5123 is not necessarily provided in the camera head 5119. For example, the imaging unit 5123 may be provided immediately behind the objective lens in the lens barrel 5117.

The drive unit 5125 is formed with an actuator, and, under the control of the camera head control unit 5129, moves the zoom lens and the focus lens of the lens unit 5121 by a predetermined distance along the optical axis. With this arrangement, the magnification and the focal point of the image captured by the imaging unit 5123 can be appropriately adjusted.

The communication unit 5127 is formed with a communication device for transmitting and receiving various kinds of information to and from the CCU 5153. The communication unit 5127 transmits the image signal obtained as RAW data from the imaging unit 5123 to the CCU 5153 via the transmission cable 5179. At this stage, to display a captured image of the surgical site with low latency, the image signal is preferably transmitted through optical communication. The operator 5181 performs surgery while observing the state of the affected site through the captured image during the operation. Therefore, for the operator 5181 to perform safe and reliable surgery, a moving image of the surgical site should be displayed in as real time as possible. In a case where optical communication is performed, a photoelectric conversion module that converts an electrical signal into an optical signal is provided in the communication unit 5127. The image signal is converted into an optical signal by the photoelectric conversion module, and is then transmitted to the CCU 5153 via the transmission cable 5179.

The communication unit 5127 also receives, from the CCU 5153, a control signal for controlling driving of the camera head 5119. The control signal includes information about imaging conditions, such as information for specifying the frame rate of captured images, information for specifying the exposure value at the time of imaging, and/or information for specifying the magnification and the focal point of captured images, for example. The communication unit 5127 supplies the received control signal to the camera head control unit 5129. Note that the control signal from the CCU 5153 may also be transmitted through optical communication. In this case, a photoelectric conversion module that converts an optical signal into an electrical signal is provided in the communication unit 5127, and the control signal is converted into an electrical signal by the photoelectric conversion module, and is then supplied to the camera head control unit 5129.

Note that the above imaging conditions such as the frame rate, the exposure value, the magnification, and the focal point are automatically set by the control unit 5177 of the CCU 5153 on the basis of the acquired image signal. That is, the endoscope 5115 has a so-called auto-exposure (AE) function, an auto-focus (AF) function, and an auto-white-balance (AWB) function.

The camera head control unit 5129 controls the driving of the camera head 5119, on the basis of the control signal received from the CCU 5153 via the communication unit 5127. For example, the camera head control unit 5129 controls the driving of the imaging element of the imaging unit 5123 on the basis of the information for specifying the frame rate of captured images and/or the information for specifying the exposure at the time of imaging. Alternatively, the camera head control unit 5129 appropriately moves the zoom lens and the focus lens of the lens unit 5121 via the drive unit 5125, on the basis of the information for specifying the magnification and the focal point of captured image, for example. The camera head control unit 5129 may further have a function to store information for identifying the lens barrel 5117 and the camera head 5119.

Note that components such as the lens unit 5121 and the imaging unit 5123 are disposed in a hermetically sealed structure with high airtightness and waterproofness, so that the camera head 5119 can be tolerant of autoclave sterilization.

Next, the functional configuration of the CCU 5153 is described. The communication unit 5173 is formed with a communication device for transmitting and receiving various kinds of information to and from the camera head 5119. The communication unit 5173 receives an image signal transmitted from the camera head 5119 via the transmission cable 5179. At this stage, the image signal can be transmitted preferably through optical communication, as described above. In this case, to cope with optical communication, the communication unit 5173 includes a photoelectric conversion module that converts an optical signal into an electrical signal. The communication unit 5173 supplies the image signal converted into the electrical signal to the image processing unit 5175.

The communication unit 5173 also transmits a control signal for controlling the driving of the camera head 5119 to the camera head 5119. The control signal may also be transmitted through optical communication.

The image processing unit 5175 performs various kinds of image processing on the image signal that is RAW data transmitted from the camera head 5119. Examples of the image processing include various kinds of known signal processing, such as a development process, an image quality enhancement process (a band emphasizing process, a super-resolution process, a noise reduction (NR) process, a camera shake correction process, and/or the like), and/or an enlargement process (an electronic zooming process), for example. The image processing unit 5175 further performs a detection process on the image signal, to perform AE, AF, and AWB.

The image processing unit 5175 is formed with a processor such as a CPU or a GPU. As this processor operates in accordance with a predetermined program, the above described image processing and the detection process can be performed. Note that, in a case where the image processing unit 5175 is formed with a plurality of GPUs, the image processing unit 5175 appropriately divides information about an image signal, and the plurality of GPUs perform image processing in parallel.

The control unit 5177 performs various kinds of control relating to imaging of the surgical site with the endoscope 5115 and display of the captured image. For example, the control unit 5177 generates a control signal for controlling the driving of the camera head 5119. In a case where the imaging conditions have already been input by the user at this stage, the control unit 5177 generates the control signal on the basis of the input made by the user. Alternatively, in a case where the endoscope 5115 has an AE function, an AF function, and an AWB function, the control unit 5177 generates a control signal by appropriately calculating an optimum exposure value, an optimum focal length, and an optimum white balance in accordance with a result of the detection process performed by the image processing unit 5175.

The control unit 5177 also causes the display device 5155 to display an image of the surgical site, on the basis of the image signal subjected to the image processing by the image processing unit 5175. In doing so, the control unit 5177 may recognize the respective objects shown in the image of the surgical site, using various image recognition techniques. For example, the control unit 5177 can detect the shape, the color, and the like of the edges of an object shown in the image of the surgical site, to recognize the surgical tool such as forceps, a specific body site, bleeding, the mist at the time of use of the energy treatment tool 5135, and the like. When causing the display device 5155 to display the image of the surgical site, the control unit 5177 may cause the display device 5155 to superimpose various kinds of surgery aid information on the image of the surgical site on the display, using a result of the recognition. As the surgery aid information is superimposed and displayed, and thus, is presented to the operator 5181, the operator 5181 can proceed with safer surgery in a more reliable manner.

The transmission cable 5179 connecting the camera head 5119 and the CCU 5153 is an electrical signal cable compatible with electrical signal communication, an optical fiber compatible with optical communication, or a composite cable thereof.

Here, in the example shown in the drawing, communication is performed in a wired manner using the transmission cable 5179. However, communication between the camera head 5119 and the CCU 5153 may be performed in a wireless manner. In a case where communication between the two is performed in a wireless manner, there is no need to install the transmission cable 5179 in the operating room. Thus, it is possible to avoid a situation in which movement of the medical staff in the operating room is hindered by the transmission cable 5179.

An example of the operating room system 5100 to which the technique according to the present disclosure can be applied has been described above. Note that, in the above described example case, a medical system to which the operating room system 5100 is applied is the endoscopic surgery system 5113. However, the configuration of the operating room system 5100 is not limited to such an example. For example, the operating room system 5100 may be applied to a flexible endoscope system for examination or a microscopic surgery system, instead of the endoscopic surgery system 5113.

The technology according to the present disclosure can be suitably applied to the audiovisual controller 5107 and the CCU 5153 among the above described components. Specifically, the audiovisual controller 5107 determines whether to perform a conversion process, depending on output devices such as the plurality of display devices 5103A through 5103D and the recorder 5105. The CCU 5153 determines whether to perform a conversion process, depending on output devices such as the centralized operation panel 5111 and the recorder 5167. As the technology according to the present disclosure is applied to the audiovisual controller 5107 and the CCU 5153, the dynamic range of an output signal can be appropriately converted when the intended use of the output is recording, and thus, user convenience can be increased.

While preferred embodiments of the present disclosure have been described above with reference to the accompanying drawings, the present disclosure is not limited to those examples. It is apparent that those who have ordinary skills in the art can make various changes or modifications within the scope of the appended claims and it should be understood that those changes or modifications are within the technical scope of the present disclosure.

### REFERENCE SIGNS LIST

- 1: Signal output system
- 11: Imaging device
- 12: Output device
- 12A: HDR signal-compatible display
- 12B: HDR signal-incompatible display
- 12C: Recording device
- 21: Optical system
- 22: Imager
- 23: Digital signal processing LSI
- 24: User interface
- 25: Camera control unit
- 26: Lens driving driver IC
- 31: Pre-processing unit
- 32: Demosaicing unit
- 33: YC generation unit
- 34: Resolution conversion unit
- 35: Memory
- 36: Signal processing unit
- 41: Dynamic range conversion unit
- 42: HDMI interface
- 51: Information acquisition unit
- 52: Device type determination unit
- 61: Interface
- 62: CPU
- 63: Memory
- 64: Display unit
- 71: Gain processing unit
- 72: Limiter processing unit

## Claims

1. A signal processing device comprising:
a conversion unit (41) configured to convert a dynamic range of an image signal to be output to an output device in dependence upon output device information, the output device information indicative of a dynamic range capability and a type of the output device, wherein for output device information indicating that the output device connected to the signal processing device is a non-display type of output device, the conversion unit is configured to prohibit conversion of the dynamic range of the image signal; and
a transmission unit (42) configured to transmit the image signal output by the conversion unit to the output device, wherein,
for output device information indicating that the output device is a display type of output device,
the conversion unit is configured to convert the dynamic range of the image signal depending on the dynamic range capability of the output device, wherein the conversion unit is configured to convert a High Dynamic Range (HDR) image signal into a Standard Dynamic Range (SDR) image signal, wherein
for output device information indicating that the output device connected to the signal processing device is the non-display type of output device and is compatible with HDR image signals the transmission unit is configured to transmit the image signal output by the conversion unit to the output device and to transmit an HDR InfoFrame to the output device, and wherein
for output device information indicating that the output device connected to the signal processing device is the non-display type of output device and is not compatible with HDR image signals the transmission unit is configured to transmit the image signal output by the conversion unit to the output device without transmitting the HDR InfoFrame.

2. The signal processing device according to claim 1, wherein the output device information is at least one of a manufacturer, a model name, and a serial number of the output device.

3. The signal processing device according to claim 1, wherein, for output device information indicating that type of the output device is a display type of output device and the dynamic range capability of the output device is compatible with an HDR image signal, the conversion unit is configured to prohibit conversion of the dynamic range of the image signal, and the transmission unit is configured to transmit the image signal after sending a control signal, the transmitted image signal being an HDR image signal.

4. The signal processing device according to claim 3, wherein the control signal is an InfoFrame.

5. The signal processing device according to claim 1, wherein, the signal processing device is an imaging device, and the type of output device determined in dependence upon the output device information during a reproduction operation is a display type of output device, and the type of output device determined in dependence upon the output device information during a recording operation is the non-display type of output device.

6. The signal processing device according to claim 1, wherein the conversion unit is configured to convert a Hybrid Log-Gamma (HLG) signal into a PQ signal.

7. The signal processing device according to claim 1, wherein the output device is one of a display device, a recording device, a measuring device, an analyzer device, an editing device, and a converter device.

8. A signal processing method implemented by a signal processing device,
the signal processing method comprising:
converting, by a conversion unit, a dynamic range of a High Dynamic Range (HDR) image signal to be output to an output device into a Standard Dynamic Range (SDR) image signal in dependence upon output device information, the output device information indicative of a dynamic range capability and a type of the output device,
the step of converting comprising prohibiting conversion of the dynamic range of the image signal for output device information indicating that the output device connected to the signal processing device is a non-display type of output device, and
the step of converting comprising converting the dynamic range of the image signal depending on the dynamic range capability of the output device for output device information indicating that the output device is a display type of output device; and
transmitting, by a transmission unit, the image signal output by the conversion unit to the output device,
the step of transmitting comprising transmitting the image signal output by the conversion unit and an HDR InfoFrame to the output device for output device information indicating that the output device connected to the signal processing device is the non-display type of output device and is compatible with HDR image signals, and
the step of transmitting comprising transmitting the image signal output by the conversion unit without transmitting the HDR InfoFrame to the output device for output device information indicating that the output device connected to the signal processing device is the non-display type of output device and is not compatible with HDR image signals.

9. A computer program for causing a computer to function as:
a conversion unit configured to convert a dynamic range of an image signal to be output to an output device in dependence upon output device information, the output device information indicative of a dynamic range capability and a type of the output device, wherein for output device information indicating that the output device connected to the signal processing device is a non-display type of output device, the conversion unit is configured to prohibit conversion of the dynamic range of the image signal; and
a transmission unit configured to transmit the image signal output by the conversion unit to the output device, wherein,
for output device information indicating that the output device is a display type of output device,
the conversion unit is configured to convert the dynamic range of the image signal depending on the dynamic range capability of the output device, wherein the conversion unit is configured to convert an High Dynamic Range (HDR) image signal into a Standard Dynamic Range (SDR) image signal, wherein
for output device information indicating that the output device connected to the signal processing device is the non-display type of output device and is compatible with HDR image signals the transmission unit is configured to transmit the image signal output by the conversion unit to the output device and to transmit an HDR InfoFrame to the output device, and wherein
for output device information indicating that the output device connected to the signal processing device is the non-display type of output device and is not compatible with HDR image signals the transmission unit is configured to transmit the image signal output by the conversion unit to the output device without transmitting the HDR InfoFrame.

## Patentansprüche

1. Signalverarbeitungsvorrichtung, umfassend:
eine Umwandlungseinheit (41), konfiguriert zum Umwandeln eines Dynamikbereichs eines Bildsignals, das an eine Ausgabevorrichtung ausgegeben werden soll, in Abhängigkeit von Ausgabevorrichtungsinformationen, wobei die Ausgabevorrichtungsinformationen ein Dynamikbereichsvermögen und einen Typ der Ausgabevorrichtung angeben, wobei für Ausgabevorrichtungsinformationen, die angeben, dass die mit der Signalverarbeitungsvorrichtung verbundene Ausgabevorrichtung ein Nichtanzeigetyp von Ausgabevorrichtung ist, die Umwandlungseinheit konfiguriert ist, eine Umwandlung des Dynamikbereichs des Bildsignals zu verhindern; und
eine Übertragungseinheit (42), konfiguriert zum Übertragen des durch die Umwandlungseinheit ausgegebenen Bildsignals an die Ausgabevorrichtung, wobei
für Ausgabevorrichtungsinformationen, die angeben, dass die Ausgabevorrichtung ein Anzeigetyp von Ausgabevorrichtung ist,
die Umwandlungseinheit zum Umwandeln des Dynamikbereichs des Bildsignals in Abhängigkeit von dem Dynamikbereichsvermögen der Ausgabevorrichtung konfiguriert ist, wobei die Umwandlungseinheit konfiguriert ist, ein Hochdynamikbereich- bzw. HDR-Bildsignal in ein Standarddynamikbereich- bzw. SDR-Bildsignal umzuwandeln, wobei
für Ausgabevorrichtungsinformationen, die angeben, dass die mit der Signalverarbeitungsvorrichtung verbundene Ausgabevorrichtung der Nichtanzeigetyp von Ausgabevorrichtung ist und mit HDR-Bildsignalen kompatibel ist, die Übertragungseinheit konfiguriert ist zum Übertragen des durch die Umwandlungseinheit ausgegebenen Bildsignals an die Ausgabevorrichtung und zum Übertragen eines HDR-InfoFrame an die Ausgabevorrichtung, und wobei
für Ausgabevorrichtungsinformationen, die angeben, dass die mit der Signalverarbeitungsvorrichtung verbundene Ausgabevorrichtung der Nichtanzeigetyp von Ausgabevorrichtung ist und mit HRD-Bildsignalen nicht kompatibel ist, die Übertragungseinheit konfiguriert ist zum Übertragen des durch die Umwandlungseinheit ausgegebenen Bildsignals an die Ausgabevorrichtung, ohne den HDR-InfoFrame zu übertragen.

2. Signalverarbeitungsvorrichtung nach Anspruch 1, wobei die Ausgabevorrichtungsinformationen mindestens eines eines Herstellers, eines Modellnamens und einer Seriennummer der Ausgabevorrichtung sind.

3. Signalverarbeitungsvorrichtung nach Anspruch 1, wobei, für Ausgabevorrichtungsinformationen, die angeben, dass der Typ der Ausgabevorrichtung ein Anzeigetyp von Ausgabevorrichtung ist und das Dynamikbereichsvermögen der Ausgabevorrichtung mit einem HDR-Bildsignal kompatibel ist, die Umwandlungseinheit konfiguriert ist, eine Umwandlung des Dynamikbereichs des Bildsignals zu verhindern, und die Übertragungseinheit konfiguriert ist zum Übertragen des Bildsignals nach Senden eines Steuersignals, wobei das übertragene Bildsignal ein HDR-Bildsignal ist.

4. Signalverarbeitungsvorrichtung nach Anspruch 3, wobei das Steuersignal ein InfoFrame ist.

5. Signalverarbeitungsvorrichtung nach Anspruch 1, wobei die Signalverarbeitungsvorrichtung eine Bildgebungsvorrichtung ist und der Typ der Ausgabevorrichtung, bestimmt in Abhängigkeit von den Ausgabevorrichtungsinformationen während eines Reproduktionsbetriebs, ein Anzeigetyp von Ausgabevorrichtung ist, und der Typ der Ausgabevorrichtung, bestimmt in Abhängigkeit von den Ausgabevorrichtungsinformationen während eines Aufzeichnungsbetriebs, der Nichtanzeigetyp von Ausgabevorrichtung ist.

6. Signalverarbeitungsvorrichtung nach Anspruch 1, wobei die Umwandlungseinheit konfiguriert ist, ein Hybrid-Log-Gamma- bzw. HLG-Signal in ein PQ-Signal umzuwandeln.

7. Signalverarbeitungsvorrichtung nach Anspruch 1, wobei die Ausgabevorrichtung eine einer Anzeigevorrichtung, einer Aufzeichnungsvorrichtung, einer Messvorrichtung, einer Analysevorrichtung, einer Editiervorrichtung und einer Umwandlervorrichtung ist.

8. Signalverarbeitungsverfahren, implementiert durch eine Signalverarbeitungsvorrichtung,
das Signalverarbeitungsverfahren umfassend:
Umwandeln, durch eine Umwandlungseinheit, eines Dynamikbereichs eines Hochdynamikbereich- bzw. HDR-Bildsignals, das an eine Ausgabevorrichtung ausgegeben werden soll, in ein Standarddynamikbereich- bzw. SDR-Bildsignal in Abhängigkeit von Ausgabevorrichtungsinformationen, wobei die Ausgabevorrichtungsinformationen ein Dynamikbereichsvermögen und einen Typ der Ausgabevorrichtung angeben,
der Schritt des Umwandelns umfassend, Umwandeln des Dynamikbereichs des Bildsignals für Ausgabevorrichtungsinformationen, die angeben, dass die mit der Signalverarbeitungsvorrichtung verbundene Ausgabevorrichtung ein Nichtanzeigetyp von Ausgabevorrichtung ist, zu verhindern und
der Schritt des Umwandelns umfassend, den Dynamikbereich des Bildsignals in Abhängigkeit von dem Dynamikbereichsvermögen der Ausgabevorrichtung für Ausgabevorrichtungsinformationen, die angeben, dass die Ausgabevorrichtung ein Anzeigetyp von Ausgabevorrichtung ist, umzuwandeln; und
Übertragen, durch eine Übertragungseinheit, des durch die Umwandlungseinheit ausgegebenen Bildsignals an die Ausgabevorrichtung,
der Schritt des Übertragens umfassend, das durch die Umwandlungseinheit ausgegebene Bildsignal und einen HDR-InfoFrame an die Ausgabevorrichtung für Ausgabevorrichtungsinformationen, die angeben, dass die mit der Signalverarbeitungsvorrichtung verbundene Ausgabevorrichtung der Nichtanzeigetyp von Ausgabevorrichtung ist und mit HDR-Bildsignalen kompatibel ist, zu übertragen und
der Schritt des Übertragens umfassend, das durch die Umwandlungseinheit ausgegebene Bildsignal an die Ausgabevorrichtung für Ausgabevorrichtungsinformationen, die angeben, dass die mit der Signalverarbeitungsvorrichtung verbundene Ausgabevorrichtung der Nichtanzeigetyp von Ausgabevorrichtung ist und mit HRD-Bildsignalen nicht kompatibel ist, zu übertragen, ohne den HDR-InfoFrame zu übertragen.

9. Computerprogramm, um einen Computer zu veranlassen, zu funktionieren als:
eine Umwandlungseinheit, konfiguriert zum Umwandeln eines Dynamikbereichs eines Bildsignals, das an eine Ausgabevorrichtung ausgegeben werden soll, in Abhängigkeit von Ausgabevorrichtungsinformationen, wobei die Ausgabevorrichtungsinformationen ein Dynamikbereichsvermögen und einen Typ der Ausgabevorrichtung angeben, wobei für Ausgabevorrichtungsinformationen, die angeben, dass die mit der Signalverarbeitungsvorrichtung verbundene Ausgabevorrichtung ein Nichtanzeigetyp von Ausgabevorrichtung ist, die Umwandlungseinheit konfiguriert ist, eine Umwandlung des Dynamikbereichs des Bildsignals zu verhindern; und
eine Übertragungseinheit, konfiguriert zum Übertragen des durch die Umwandlungseinheit ausgegebenen Bildsignals an die Ausgabevorrichtung, wobei
für Ausgabevorrichtungsinformationen, die angeben, dass die Ausgabevorrichtung ein Anzeigetyp von Ausgabevorrichtung ist,
die Umwandlungseinheit konfiguriert ist zum Umwandeln des Dynamikbereichs des Bildsignals in Abhängigkeit von dem Dynamikbereichsvermögen der Ausgabevorrichtung, wobei die Umwandlungseinheit konfiguriert ist, ein Hochdynamikbereich- bzw. HDR-Bildsignal in ein Standarddynamikbereich- bzw. SDR-Bildsignal umzuwandeln, wobei
für Ausgabevorrichtungsinformationen, die angeben, dass die mit der Signalverarbeitungsvorrichtung verbundene Ausgabevorrichtung der Nichtanzeigetyp von Ausgabevorrichtung ist und mit HDR-Bildsignalen kompatibel ist, die Übertragungseinheit konfiguriert ist zum Übertragen des durch die Umwandlungseinheit ausgegebenen Bildsignals an die Ausgabevorrichtung und zum Übertragen eines HDR-InfoFrame an die Ausgabevorrichtung, und wobei
für Ausgabevorrichtungsinformationen, die angeben, dass die mit der Signalverarbeitungsvorrichtung verbundene Ausgabevorrichtung der Nichtanzeigetyp von Ausgabevorrichtung ist und mit HRD-Bildsignalen nicht kompatibel ist, die Übertragungseinheit konfiguriert ist zum Übertragen des durch die Umwandlungseinheit ausgegebenen Bildsignals an die Ausgabevorrichtung, ohne den HDR-InfoFrame zu übertragen.

## Revendications

1. Dispositif de traitement de signal, comprenant :
une unité de conversion (41) configurée pour convertir une plage dynamique d'un signal d'image à délivrer à un dispositif de sortie en fonction d'informations sur le dispositif de sortie, les informations sur le dispositif de sortie indiquant une capacité de plage dynamique et un type du dispositif de sortie ; pour des informations sur le dispositif de sortie indiquant que le dispositif de sortie connecté au dispositif de traitement de signal est un type de dispositif de sortie sans affichage, l'unité de conversion étant configurée pour empêcher la conversion de la plage dynamique du signal d'image ; et
une unité de transmission (42) configurée pour transmettre le signal d'image délivré par l'unité de conversion au dispositif de sortie,
pour des informations sur le dispositif de sortie indiquant que le dispositif de sortie est un type de dispositif de sortie à affichage,
l'unité de conversion étant configurée pour convertir la plage dynamique du signal d'image en fonction de la capacité de plage dynamique du dispositif de sortie, l'unité de conversion étant configurée pour convertir un signal d'image à plage dynamique étendue (HDR) en un signal d'image à plage dynamique standard (SDR),
pour des informations sur le dispositif de sortie indiquant que le dispositif de sortie connecté au dispositif de traitement de signal est le type de dispositif de sortie sans affichage et est compatible avec des signaux d'image HDR, l'unité de transmission étant configurée pour transmettre le signal d'image délivré par l'unité de conversion au dispositif de sortie et pour transmettre une InfoFrame HDR au dispositif de sortie, et
pour des informations sur le dispositif de sortie indiquant que le dispositif de sortie connecté au dispositif de traitement de signal est le type de dispositif de sortie sans affichage et n'est pas compatible avec des signaux d'image HDR, l'unité de transmission étant configurée pour transmettre le signal d'image délivré par l'unité de conversion au dispositif de sortie sans transmettre l'InfoFrame HDR.

2. Dispositif de traitement de signal selon la revendication 1, dans lequel les informations sur le dispositif de sortie consistent en un fabricant et/ou un nom de modèle et/ou un numéro de série du dispositif de sortie.

3. Dispositif de traitement de signal selon la revendication 1, dans lequel, pour des informations sur le dispositif de sortie indiquant que le type du dispositif de sortie est un type de dispositif de sortie à affichage et la capacité de plage dynamique du dispositif de sortie est compatible avec un signal d'image HDR, l'unité de conversion est configurée pour empêcher la conversion de la plage dynamique du signal d'image, et l'unité de transmission est configurée pour transmettre le signal d'image après avoir envoyé un signal de commande, le signal d'image transmis étant un signal d'image HDR.

4. Dispositif de traitement de signal selon la revendication 3, dans lequel le signal de commande est une InfoFrame.

5. Dispositif de traitement de signal selon la revendication 1, le dispositif de traitement de signal étant un dispositif d'imagerie, et le type de dispositif de sortie déterminé en fonction des informations sur le dispositif de sortie durant une opération de reproduction étant un type de dispositif de sortie à affichage, et le type de dispositif de sortie déterminé en fonction des informations sur le dispositif de sortie durant une opération d'enregistrement étant le type de dispositif de sortie sans affichage.

6. Dispositif de traitement de signal selon la revendication 1, dans lequel l'unité de conversion est configurée pour convertir un signal log-gamma hybride (HLG) en un signal PQ.

7. Dispositif de traitement de signal selon la revendication 1, dans lequel le dispositif de sortie est un dispositif parmi un dispositif d'affichage, un dispositif d'enregistrement, un dispositif de mesure, un dispositif analyseur, un dispositif d'édition et un dispositif convertisseur.

8. Procédé de traitement de signal mis en œuvre par un dispositif de traitement de signal,
le procédé de traitement de signal comprenant :
la conversion, par une unité de conversion, d'une plage dynamique d'un signal d'image à plage dynamique étendue (HDR) à délivrer à un dispositif de sortie en un signal d'image à plage dynamique standard (SDR) en fonction d'informations sur le dispositif de sortie, les informations sur le dispositif de sortie indiquant une capacité de plage dynamique et un type du dispositif de sortie,
l'étape de conversion comprenant l'empêchement de la conversion de la plage dynamique du signal d'image pour des informations sur le dispositif de sortie indiquant que le dispositif de sortie connecté au dispositif de traitement de signal est un type de dispositif de sortie sans affichage, et
l'étape de conversion comprenant la conversion de la plage dynamique du signal d'image en fonction de la capacité de plage dynamique du dispositif de sortie pour des informations sur le dispositif de sortie indiquant que le dispositif de sortie est un type de dispositif de sortie à affichage ; et
la transmission, par une unité de transmission, du signal d'image délivré par l'unité de conversion au dispositif de sortie,
l'étape de transmission comprenant la transmission du signal d'image délivré par l'unité de conversion et d'une InfoFrame HDR au dispositif de sortie pour des informations sur le dispositif de sortie indiquant que le dispositif de sortie connecté au dispositif de traitement de signal est le type de dispositif de sortie sans affichage et est compatible avec des signaux d'image HDR, et
l'étape de transmission comprenant la transmission du signal d'image délivré par l'unité de conversion sans transmission de l'InfoFrame HDR au dispositif de sortie pour des informations sur le dispositif de sortie indiquant que le dispositif de sortie connecté au dispositif de traitement de signal est le type de dispositif de sortie sans affichage et n'est pas compatible avec des signaux d'image HDR.

9. Programme d'ordinateur pour amener un ordinateur à fonctionner comme :
une unité de conversion configurée pour convertir une plage dynamique d'un signal d'image à délivrer à un dispositif de sortie en fonction d'informations sur le dispositif de sortie, les informations sur le dispositif de sortie indiquant une capacité de plage dynamique et un type du dispositif de sortie ; pour des informations sur le dispositif de sortie indiquant que le dispositif de sortie connecté au dispositif de traitement de signal est un type de dispositif de sortie sans affichage, l'unité de conversion étant configurée pour empêcher la conversion de la plage dynamique du signal d'image ; et
une unité de transmission configurée pour transmettre le signal d'image délivré par l'unité de conversion au dispositif de sortie,
pour des informations sur le dispositif de sortie indiquant que le dispositif de sortie est un type de dispositif de sortie à affichage,
l'unité de conversion étant configurée pour convertir la plage dynamique du signal d'image en fonction de la capacité de plage dynamique du dispositif de sortie, l'unité de conversion étant configurée pour convertir un signal d'image à plage dynamique étendue (HDR) en un signal d'image à plage dynamique standard (SDR),
pour des informations sur le dispositif de sortie indiquant que le dispositif de sortie connecté au dispositif de traitement de signal est le type de dispositif de sortie sans affichage et est compatible avec des signaux d'image HDR, l'unité de transmission étant configurée pour transmettre le signal d'image délivré par l'unité de conversion au dispositif de sortie et pour transmettre une InfoFrame HDR au dispositif de sortie, et
pour des informations sur le dispositif de sortie indiquant que le dispositif de sortie connecté au dispositif de traitement de signal est le type de dispositif de sortie sans affichage et n'est pas compatible avec des signaux d'image HDR, l'unité de transmission étant configurée pour transmettre le signal d'image délivré par l'unité de conversion au dispositif de sortie sans transmettre l'InfoFrame HDR.
